# NEUE EUROPÄISCHE PATENTSCHRIFT

(11) **EP 0 933 542 B2**
(45) Veröffentlichungstag und Bekanntmachung des Hinweises auf die Entscheidung über den Einspruch: **09.01.2008**
(45) Hinweis auf die Patenterteilung: 24.11.2004
(21) Anmeldenummer: 99100296.5
(22) Anmeldetag: 09.01.1999
(51) Int. Cl.: F16C 11/06, B29C 53/34, B29C 57/12, B29C 65/56, B62D 7/18

(54) **Verfahren zur Festlegung einer Lagerschale eines Kugelgelenks**
Method for fixing a lining of a ball joint
Procédé pour fixer la garniture d'un joint à rotule

(30) Priorität: 28.01.1998 DE 19803056
(43) Veröffentlichungstag der Anmeldung: 04.08.1999
(73) Patentinhaber: TRW Automotive GmbH, 73553 Alfdorf (DE)
(72) Erfinder: Orend, Sven Helgi, 40211 Düsseldorf (DE)
(74) Vertreter: Stenger, Watzke & Ring

(56) Entgegenhaltungen:
- EP-A- 0 345 452
- EP-A- 0 742 375
- DE-A- 4 212 464
- DE-A- 4 306 006
- DE-C- 3 843 331
- FR-A- 1 369 997
- US-A- 2 779 998
- DATABASE WPI, Woche 199350, Derwent Publications Ltd., London, GB; Klasse Q62, AN 1993-403028, XP002900792 & SU 1779822 A (VOLG TRACTOR WKS), 07. Dezember 1992

## Beschreibung

Die Erfindung betrifft ein Verfahren zur Festlegung einer aus Kunststoff bestehenden Lagerschale eines Kugelgelenks, insbesondere für Kraftfahrzeuge, an einem Bauteil, das mit einer durchgehenden zylindrischen Aufnahmeöffnung für die Lagerschale versehen ist, die an einer Seite des Bauteils mit einer Anschlagfläche anliegt und an der gegenüberliegenden Seite des Bauteils durch Umformen eines aus der Aufnahmeöffnung hervorstehenden, vorzugsweise ringförmigen Bundes festgelegt wird.

Insbesondere für Kraftfahrzeuge sind Kugelgelenke bekannt, deren mit einer Gelenkkugel versehener Kugelzapfen verdrehbar und begrenzt schwenkbar in einer aus Kunststoff bestehenden Lagerschale gelagert ist, die ihrerseits in einer durchgehenden zylindrischen Aufnahmeöffnung eines Bauteils angeordnet ist, das beispielsweise in der Art eines Gelenkgehäuses dasjenige Element bildet, gegenüber dem der Kugelzapfen seine Relativbewegungen ausführt.

Um unter Verwendung von möglichst wenig Bauteilen mit einfachem Aufbau ein preiswertes und in großen Serien montierbares Kugelgelenk zu schaffen, ist es aus der gattungsbildenden DE 38 43 331 A1 bekannt, die die Gelenkkugel aufnehmende Lagerschale aus Kunststoff mit einer Anschlagfläche auszubilden, die an einer Seite des mit der durchgehenden zylindrischen Aufnahmeöffnung versehenen Bauteils formschlüssig anliegt. An der gegenüberliegenden Seite ist die Lagerschale mit einem vorzugsweise ringförmigen Bund versehen, der nach dem Einsetzen der die Gelenkkugel aufnehmenden Lagerschale aus der Aufnahmeöffnung des Bauteils hervorsteht. Durch Umformen dieses hervorstehenden Bundes wird die Lagerschale am Bauteil festgelegt. Bei dem aus der DE 38 43 331 A1 bekannten Verfahren erfolgt das Umformen des Bundes mittels eines in der Art einer Presse wirkenden Umformwerkzeuges, das in axialer Richtung der in eine Aufnahmevorrichtung eingesetzten Lagerschale bewegt wird und den zuvor erwärmten Bund bis zur Anlage am Bauteil umformt; die Erwärmung des Bundes erfolgt auf eine Temperatur, die etwa 5° unterhalb der Schmelztemperatur des für die Lagerschale verwendeten Kunststoffes liegt.

Da die Erwärmung der Lagerschale auf eine nur wenige Grade unterhalb der Schmelztemperatur des Kunststoffmaterials liegende Temperatur nicht nur mit einem zusätzlichen Energieaufwand verbunden ist, sondern insbesondere bei einer großseriellen Montage im Hinblick auf die Einhaltung enger Temperaturgrenzen mit nicht unerheblichen Risiken verbunden ist, wurde mit der DE 43 06 006 A1 ein Verfahren vorgeschlagen, bei dem die Umformung des Bundes der Lagerschale ohne vorherige Erwärmung des Kunststoffmaterials durch Ultraschallverformung erfolgt. Dieses Verfahren vermeidet zwar den für die Erwärmung erforderlichen Energieeinsatz, hat jedoch den Nachteil, daß die für die Ultraschallverformung eingesetzten, formgebenden Werkzeuge sehr teuer sind, weil sie mit hoher Oberflächen-, Maß- und Formgenauigkeit hergestellt werden müssen.

Der Erfindung liegt die **Aufgabe** zugrunde, das bekannte, eingangs beschriebene Verfahren zur Festlegung einer aus Kunststoff bestehenden Lagerschale eines Kugelgelenks an einem Bauteil mit dem Ziel einer weiteren Vereinfachung und Kostenreduzierung weiterzuentwickeln.

Die **Lösung** dieser Aufgabenstellung sieht die Merkmale des Anspruchs 1 vor.

Die erfindungsgemäße Umformung des an der Lagerschale angeformten Bundes erfordert weder eine Erwärmung der Lagerschale auf eine kritische, nur knapp unterhalb des Schmelzpunktes des Lagerschalenmaterials liegende Temperatur, noch den Einsatz teurer Werkzeuge für eine Ultraschallumformung. Durch Wahl der Rotationsgeschwindigkeit des Werkzeuges und seiner axialen Zustellgeschwindigkeit läßt sich mit dem erfindungsgemäßen Verfahren die jeweils gewünschte Erwärmung des umzuformenden Bundes erzeugen, die nicht nur vom jeweils gewählten Kunststoffmaterial, sondern auch von der jeweiligen Querschnittsform des Bundes abhängig ist.

Das zur Umformung des Lagerschalenbundes verwendete Werkzeug wird gemäß der Erfindung als Rolle ausgebildet sein, die einerseits um ihre eigene Achse rotiert und gleichzeitig auf einer der Form des umzuformenden Bundes entsprechenden Bahn bewegt wird. In diesem Fall kann der axialen Zustellbewegung der Rolle eine radiale Zustellbewegung überlagert werden, um eine optimale Verformung zu bewirken.

Mit der Erfindung wird schließlich vorgeschlagen, das Werkzeug mit einer ringnutförmigen Arbeitsfläche auszubilden, die einen dem Querschnitt des Bundes im umgeformten Zustand entsprechenden Querschnitt aufweist.

Auf der Zeichnung sind zwei Ausführungsbeispiele dargestellt, und zwar zeigen:
- Fig. 1: einen Querschnitt durch ein Kugelgelenk vor der Umformung des Lagerschalenbundes,
- Fig. 2: einen der Fig. 1 entsprechenden Querschnitt, bei dem der Lagerschalenbund mittels eines Ausführungsbeispiels umgeformt worden ist,
- Fig. 3: einen den Fig. 1 und 2 entsprechenden Querschnitt, bei dem der Lagerschalenbund gemäß einem Ausführungsbeispiel des erfindungsgemäßen Verfahrens umgeformt worden ist, und
- Fig. 4: einen weiteren Querschnitt durch das Kugelgelenk nach erfolgter Umformung des Lagerschalenbundes.

Das anhand eines Ausführungsbeispiels dargestellte Kugelgelenk umfaßt eine am Ende eines Kugelzapfens 1 angeformte Lagerkugel 2, die in einer aus Kunststoff hergestellten Lagerschale 3 verdrehbar sowie begrenzt kippbar gelagert ist. Die Lagerschale 3 ist in einer durchgehenden, zylindrischen Aufnahmeöffnung 4.1 eines Bauteils 4 angeordnet, das zugleich als Gehäuse des Kugelgelenks dient.

Die Lagerschale 3 liegt mit einer ringförmigen Anlagefläche 3.1 an der Unterseite des Bauteiles 4 an. Diese Anlagefläche 3.1 ist durch einen im Durchmesser vergrößerten Ringflansch 3.2 entstanden, der die Öffnung der Lagerschale 3 umgibt und zugleich als Anschlag für die Begrenzung des Verschwenkwinkels des Kugelzapfens 1 dient.

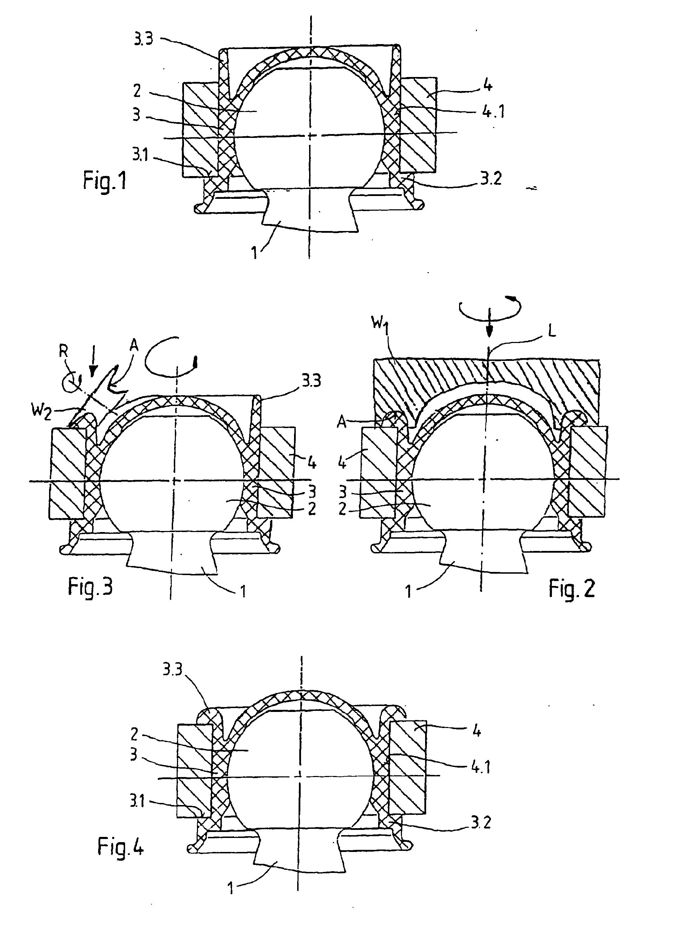

An der gegenüberliegenden, beim Ausführungsbeispiel geschlossenen Seite der Lagerschale 3 ist diese mit einem ringförmigen Bund 3.3 versehen, der an der Oberseite des Bauteils 4 aus der zylindrischen Aufnahmeöffnung 4.1 herausragt. Um die Lagerschale 3 formschlüssig in der Aufnahmeöffnung 4.1 des Bauteils 4 zu halten, wird dieser Bund 3.3 der Lagerschale 3 derart umgeformt, daß er gemäß Fig. 4 an der der Anlagefläche 3.1 gegenüberliegenden Seite, d. h. beim Ausführungsbeispiel an der Oberseite des Bauteiles 4 anliegt, wie dies die Fig. 4 zeigt.

Die Umformung des ursprünglich zylindrischen Bundes 3.1 der Lagerschale 3 erfolgt durch die axiale Zustellung eines rotierenden Werkzeuges, von dem auf der Zeichnung zwei Ausführungsbeispiele dargestellt sind.

Beim Ausführungsbeispiel nach Fig. 2 wird ein Werkzeug W₁ verwendet, das um die Längsmittelachse L der Lagerschale 3 und damit des Kugelgelenks rotiert und mit einer ringnutförmigen Arbeitsfläche A versehen ist, deren Querschnitt demjenigen Querschnitt entspricht, den der umgeformte Bund 3.3 gemäß Fig. 4 hat. Durch axiale Zustellung des um die Längsmittelachse L rotierenden Werkzeuges W₁ erwärmt sich aufgrund der auftretenden Reibung das Material des Bundes 3.3, so daß der Bund 3.3 mit Hilfe des Werkzeuges W₁ aus der in Fig. 1 dargestellten Form in die Form gemäß Fig. 4 umgeformt werden kann. Durch die Rotationsgeschwindigkeit und die Zustellgeschwindigkeit des Werkzeuges W₁ kann die für den Umformprozeß notwendige Erwärmung bestimmt werden.

Beim erfindungsgemäßen Ausführungsbeispiel nach Fig. 3 erfolgt die Umformung des Bundes 3.3 der Lagerschale 3 mittels eines Werkzeuges W₂, das als Rolle ausgebildet ist. Auch dieses rollenförmige Werkzeug W₂ ist mit einer ringnutförmigen Arbeitsfläche A ausgebildet, deren Querschnitt dem Querschnitt des umgeformten Bundes 3.3 gemäß Fig. 4 entspricht. Bei diesem zweiten Ausführungsbeispiel rotiert das rollenförmige Werkzeug W₂ um die eigene Achse R; gleichzeitig wird das Werkzeug W₂ auf einer der Form des umzuformenden Bundes 3.3 entsprechenden Bahn bewegt. Beim Ausführungsbeispiel handelt es sich hierbei um eine Kreisbahn. Auch bei diesem Ausführungsbeispiel erfolgt durch eine axiale Zustellung des Werkzeuges W₂ die gewünschte Umformung des ursprünglich zylindrischen Bundes 3.3 in die in Fig. 4 dargestellte endgültige Form. Der axialen Zustellbewegung des Werkzeuges W₁ kann hierbei eine radiale Zustellbewegung überlagert werden.

Wie aus den voranstehenden Erläuterungen hervorgeht, erfordert das voranstehend erläuterte Verfahren weder eine Erwärmung der Lagerschale 3 bzw. des Bundes 3.3 auf eine knapp unterhalb der Schmelztemperatur des Kunststoffmaterials liegende Temperatur, noch den Einsatz hochpräziser und damit teurer Sonotroden für eine Erwärmung und Umformung mittels Ultraschall.

## Patentansprüche

1. Verfahren zur Festlegung einer aus Kunststoff bestehenden Lagerschale (3) eines Kugelgelenkes, insbesondere für Kraftfahrzeuge, an einem Bauteil (4), das mit einer durchgehenden zylindrischen Aufnahmeöffnung (4.1) für die Lagerschale (3) versehen ist, die an einer Seite des Bauteils (4) mit einer Anlagefläche (3.1) anliegt und an der gegenüberliegenden Seite des Bauteils (4) durch Umformen eines aus der Aufnahmeöffnung (4.1) hervorstehenden, vorzugsweise ringförmigen Bundes (3.3) festgelegt wird,
**dadurch gekennzeichnet,**
**daß** der Bund (3.3) durch die axiale Zustellung eines rotierenden Werkzeuges (W₂) bis zur Anlage an der die Aufnahmeöffnung (4.1) umgebenden Fläche des Bauteils (4) umgeformt wird, wobei das Werkzeug (W₂) als Rolle ausgebildet ist, die um ihre eigene Achse (R) rotiert und gleichzeitig auf einer der Form des umzuformenden Bundes (3.3) entsprechenden Bahn bewegt wird.

2. Verfahren nach Anspruch 1, **dadurch gekennzeichnet, daß** der axialen Zustellbewegung des Werkzeuges (W₂) eine radiale Zustellbewegung überlagert wird.

3. Verfahren nach mindestens einem der Ansprüche 1 bis 2, **dadurch gekennzeichnet, daß** das Werkzeug (W₂) eine ringnutförmige Arbeitsfläche (A) mit einem dem Querschnitt des umgeformten Bundes (3.3) entsprechenden Querschnitt aufweist.

## Claims

1. Method for fixing a plastic bearing shell (3) of a ball joint, in particular for motor vehicles, to a component (4) provided with a cylindrical receiving through-opening (4.1) for the bearing shell (3) which bears on one side of the component (4) by way of a bearing surface (3.1) and is fixed to the opposite side of the component (4) by reshaping a preferably annular collar (3.3) protruding from the receiving opening (4.1),
**characterized in**
**that** the collar (3.3) is reshaped by axially advancing a rotating tool (W₂) until it bears on the surface of the component (4) surrounding the receiving opening (4.1), said tool (W₂) being designed as a roller which rotates about its own axis (R) and is simultaneously moved on a path corresponding to the shape of the collar (3.3) to be reshaped.

2. Method according to claim 1, **characterized in**
**that** the axial advancing movement of the tool (W₂) has superimposed to it a radial advancing movement.

3. Method according to at least one of the claims 1 to 2, **characterized in that** the tool (W₂) includes an annular groove-shaped working surface (A) having a cross section corresponding to the cross section of the reshaped collar (3.3).

## Revendications

1. Procédé de fixation d'une coquille de coussinet (3) en matière plastique d'un joint à rotule, en particulier pour des véhicules automobiles, sur une pièce (4) qui comporte un orifice de réception (4.1) cylindrique traversant, destiné à recevoir la coquille de coussinet (3), orifice qui, sur un côté de la pièce (4), est adjacent à une surface d'appui (3.1) et, sur le côté opposé de la pièce (4), est bloqué par la déformation d'une collerette (3.3), de préférence annulaire, en saillie hors de l'orifice de réception (4.1), **caractérisé en ce que** la collerette (3.3) est déformée par l'approche axiale d'un outil rotatif (W2) jusqu'à venir en appui contre la surface de la pièce (4) entourant l'orifice de réception (4.1), dans lequel l'outil (W2) est conçu en forme de rouleau qui tourne autour de son propre axe (R) et, simultanément, se déplace sur une trajectoire correspondant à la forme de la collerette (3.3) à déformer.

2. Procédé selon la revendication 1, **caractérisé en ce qu'**un mouvement d'approche radial est superposé au mouvement d'approche axial de l'outil (W2).

3. Procédé selon l'une des revendications 1 ou 2, **caractérisé en ce que** l'outil (W2) comporte une surface de travail (A) en forme de rainure circulaire, avec une section correspondant à la section de la collerette (3.3) déformée.
